# EUROPEAN PATENT SPECIFICATION

(11) **EP 2 020 660 B1**
(45) Date of publication and mention of the grant of the patent: **20.04.2011**
(21) Application number: 08161285.5
(22) Date of filing: 28.07.2008
(51) Int. Cl.: G21C 3/322

(54) **Water rod for boiling water nuclear reactor fuel assembly and method for improving water flow through the assembly**
Wasserkanal für Siedewasserreaktor-Kernbrennstoffbündel und Verfahren zur Verbesserung des Wasserflusses durch das Bündel
Canal d'eau pour ensemble de carburant d'un réacteur nucléaire à eau bouillante et procédé d'amélioration du débit d'eau grâce à cet ensemble

(30) Priority: 30.07.2007 US 830174
(43) Date of publication of application: 04.02.2009
(73) Proprietor: Global Nuclear Fuel-Americas, LLC, Wilmington, North Carolina 28401 (US)
(72) Inventor: Elkins, Robert B., Wilmington, NC 28411 (US); Makovicka, Mason Dennis, Wilmington, NC 28412 (US); DeFilippis, Michael S., Wilmington, NC 28411 (US)
(74) Representative: Gray, Thomas

(56) References cited:
- DE-A1- 19 641 322
- US-A- 5 230 858
- US-A- 5 247 552
- US-A- 5 528 641
- US-B1- 6 181 763

## Description

### BACKGROUND OF THE INVENTION

The present invention relates to a nuclear fuel rod assembly for a boiling water reactor (BWR) and, particularly, relates to a water rod in the assembly.

A fuel assembly in a boiling water nuclear reactor typically includes a matrix of parallel fuel and water rods held in place by spacers and upper and lower tie plates. The fuel rods contain fissionable fuel in an enriched fuel section of the rods. Many of the fuel rods generally extend the entire vertical distance between the upper and lower tie plates, and some of the fuel rods may extend part-way up the assembly from the lower tie plate. The water rods provide additional liquid water moderator flow through the interior of the fuel assembly. Spacers are arranged at various locations along the vertical length of the fuel assembly and hold the fuel rods and water rods in a fixed relationship in the fuel assembly. The lower ends of the fuel rods and water rods have end plugs that fit into the lower tie plate which supports the rods. The lower tie plate includes flow holes to provide an inlet for moderator and coolant flow to the fuel assembly and moderator. The upper tie plate receives the upper ends of the rods, restrains lateral movement of the fuel rods and water rods, and has flow holes to discharge coolant from the fuel assembly.

US 6181763 discloses a fuel bundle assembly for a boiling water nuclear reactor, wherein at lest one water rod is supported on a lower tie plate and extends upwardly toward an upper tie plate.

DE 196 41 322 and US 5528641 disclose further examples of fuel bundle assemblies.

US 5230858 relates to a water rod having two compartments for a boiling water reactor, and US 5247552 discloses a shortened and "boat-tailed" end for a boiling water reactor fuel assembly water channel.

### BRIEF DESCRIPTION OF THE INVENTION

The present invention provides a nuclear reactor fuel bundle assembly comprising: a fuel bundle including an array of fuel rods attached to a lower tie plate, an upper tie plate and housed in walls of a channel, and a water rod having an upper discharge end below and unattached to the upper tie plate, wherein the upper discharge end is below an enriched section of at least one of the fuel rods characterised in that the water rod is unattached to the lower tie plate and the water rod has a lower inlet above an upper surface of the lower tie plate.

Further, the present invention provides a method to include a water rod in a nuclear reactor fuel bundle assembly including an array of fuel rods attached to an upper tie plate and housed in a channel, the method comprising: selecting a plurality of water rods; inserting the water rods in the assembly, and arranging an upper discharge end of one of the water rods to be at an elevation in the assembly different by at least 15cm (six vertical inches) from an elevation of an upper discharge end of another one of the water rods, the or each water rod being unattached to the upper tie plate and a lower tie plate, and having a lower inlet above an upper surface of the lower tie plate.

### BRIEF DESCRIPTION OF THE DRAWINGS

FIGURE 1 is a side view of a fuel assembly with a portion of the assembly removed to show the water rods.

FIGURE 2 is a side view of a fuel assembly with a portion of the assembly removed to show an alternative arrangement of the water rods.

FIGURES 3 to 6 illustrate water rods having different cross-sectional shapes in fuel assemblies.

### DETAILED DESCRIPTION OF THE INVENTION

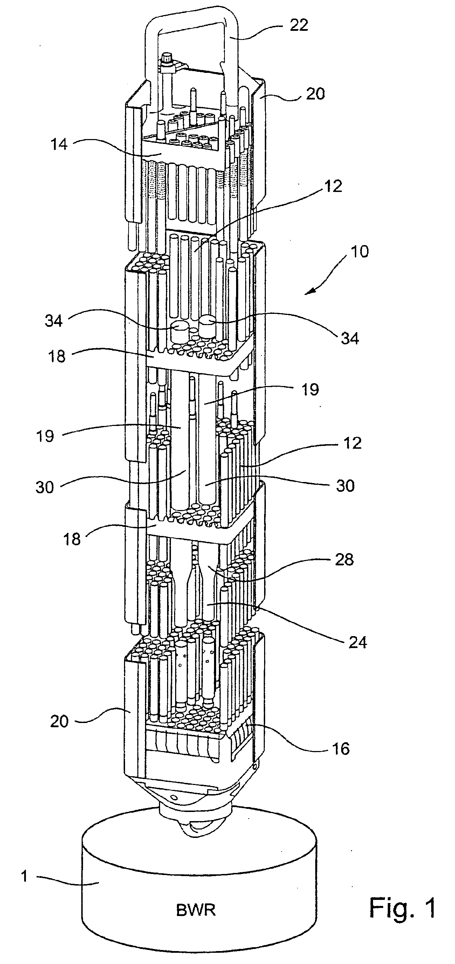

FIGURE 1 is a side view showing in cross-section a fuel bundle assembly 10 shaped generally as a vertical column with a square cross-section. The assembly includes an array of fuel rods 12 supported by an upper tie plate 14, a lower tie plate 16, and at least one spacer 18 arranged at a location(s) along the length of the fuel rods. One or more water rods 19 are arranged centrally in the array of fuel rods. A hollow channel 20, having thin-metal walls, forms an outer housing for the assembly. A generally U-shaped lifting bail 22 is attached to the channel or the upper tie plate.

The illustration of the channel and portions of several of the fuel rods in Figure 1 has been removed to expose the water rods in the center of the assembly 10. In addition, the illustration of the fuel assembly 10 in Figure 1 is split at top and bottoms quarter sections to show the top, middle and bottom sections of the assembly in the figure. A fuel bundle assembly may appear longer than is shown in Figure 1.

The fuel bundle assembly 10 is arranged vertically in a boiling water reactor (BWR) 1. Several hundred fuel assemblies are typically arranged in a matrix in the water filled core of a BWR. In each fuel bundle assembly, moderator and coolant, e.g., water, flows upwards through the core and fuel bundle assemblies and is circulated back to the bottom of the core.

Coolant and moderator liquid, e.g., water, flows up through each individual fuel bundle assembly in the BWR core. The coolant and moderator liquid enters the bottom of the assembly and flows through the lower tie plate 16. An open mesh structure of the lower tie plate allows liquid to flow through the interior of the channel 20 and along the fuel rods in the assembly. The water rods 19 increase the amount of liquid water moderator in the fuel bundle assembly.

As the coolant and moderator liquid flows through each fuel bundle assembly, the liquid extracts heat from the fuel rods and provides a safeguard to prevent excessive heating of the fuel rods. The liquid may be converted to steam, especially in the upper elevations of the fuel bundle assemblies. As the heated fluid, e.g., steam, flows from the core, heat is extracted and used for power production and the cooled fluid is returned to the bottom of the core for reuse as coolant and moderator. The motive force for circulation of the coolant and moderator fluid through the BWR core may be natural circulation, or due to pumping of the coolant water through the core.

The coolant and moderator liquid flowing up through the fuel bundle assembly also serves as a moderator to the nuclear reaction occurring within the enriched portions of the fuel rods. The moderator function of the liquid is in addition to the coolant function of the liquid. The moderator function of the liquid is sharply lessened as the liquid is converted to steam. The fluid flowing along the fuel rods and up through a fuel bundle assembly has typically been mostly converted to steam as the fluid reaches the upper elevations of the fuel rods, such as the upper one third to one quarter of the fuel rods.

Water rods 19 provide a passage for liquid moderator to flow to the upper elevations of the fuel assembly. The liquid in the water rods tends to have a velocity greater than the average fluid velocity moving up between the fuel rods. The liquid in the water rod is also separated from the hot surfaces of the fuel rods. The liquid in the water rods remains as a liquid at the upper elevations of the fuel bundle assembly where much of the fluid flowing between the fuel rods has been converted to steam. The liquid in the water rods serves as a moderator to the upper elevations of the fuel rods, particularly along the upper sections of the rod that are surrounded by steam. Accordingly, there is a moderation function benefit to liquid flowing through the water rods up to an elevation at least as high as the top end of the enriched section of the fuel rods.

The steam fluid in the upper elevations of the fuel bundle require a substantially greater passage volume than does the primarily liquid flowing through lower elevations of the fuel bundle. Due to the higher volume of the steam, there is a need to increase the passage area within the upper elevations of the fuel bundle. Without a substantial increase in passage area in the upper elevations of the fuel bundle, the steam will be constricted by the channel and rods, and will cause a pressure increase that inhibits the passage of coolant and moderator through the entire fuel bundle assembly. Increasing the coolant passage area in the upper elevations of the fuel bundle should reduce the steam pressure in the upper elevations and thus reduce the pressure difference between the lower and upper elevations of the fuel bundle.

The coolant passage in the upper elevations of the fuel bundle can be increased by terminating one or more of the water rods at an elevation(s) below the upper tie plate. Ending a water rod expands the area available to the coolant, e.g., steam, to flow up above the end of the water rod and continue through the fuel bundle. The area for steam passage increases by the cross-sectional area of the water rod(s) that are terminated. In addition, the liquid discharged from the water rod may continue to serve as a moderator, especially as the liquid rises in the fuel bundle assembly and before it is converted to steam. Further, the liquid discharged from the upper end of a water rod can serve as coolant, especially if the liquid flows to the surfaces of the fuel rods.

The pressure drop through the fuel bundle is reduced due to the additional coolant passage area obtained by the termination of the upper end(s) of the water rod(s) below the upper tie plate. Reducing the pressure drop allows for greater volume of coolant and moderator fluids to pass up through the fuel bundle.

A balance is to be achieved between ensuring that sufficient moderation liquid reaches the upper elevations of the enriched portions of the fuel rods and that the pressure drop through the fuel bundle is minimized. On the other hand, terminating the upper ends of the water rods may reduce the volume of moderator liquid that reaches the upper elevations of the bundle. On the other hand, an excessive pressure drop in the fluid passages in the fuel bundle assembly may restrict the volume of coolant and moderator fluid passing through the bundle assembly. The pressure drop can be reduced by increasing the available coolant passage area between the fuel rods, especially in the upper elevations of the fuel bundle assembly where much of the coolant has converted to steam. Terminating the water rods at elevations were the fuel rods are enriched reduces the volume of moderator liquid at the upper sections of the fuel rods, but increases the coolant passage area reduces the pressure drop through the assembly and thereby increases the rate of fluid passing through the assembly. The need for a balance between coolant passage area and moderator flow is greatest with natural circulation reactors which need low pressure losses in coolant flow through the fuel bundle assemblies to promote circulation through the assemblies of the coolant and moderator fluid.

A designer of the fuel bundle assembly can balance the need for moderator liquid in the upper elevations of the enriched portion of the fuel rods with the need for greater fluid passage area in the upper elevations at and above the enriched portions of the fuel bundle. The balancing process can utilize commonly used fuel bundle molding programs and/or trial and error. Available approaches to achieving a balance include: multiple water rods which each have an upper end that discharges liquid at different elevations in the fuel bundle, and at least one water rod terminating above the enriched portion of the fuel rods. Preferably, at least one water rod discharges liquid above the enriched portion of the fuel bundle assembly, to ensure that moderator liquid passes through all elevations of the enriched portion of the fuel bundle assembly.

The lower end section 24 of the water rod may be attached to the lower tie plate 16 and include coolant inlet ports. The bottom of the lower end section 24 may be threaded to engage a treaded aperture in the lower tie plate or use other engagement methods. Further, the lower tie plate may include coolant flow path(s) for coolant flow up into the water rod(s). The lower end section 24 may comprises a narrow diameter cylindrical section that includes a plurality of side coolant inlet ports. A transition section 28 in the water rod expands the internal diameter of the rod from the lower end section 24 to the upper section 30.

By way of example, the lower section 24 may be a relatively short portion of the water rod, e.g., two to five feet (0.6 to 1.5 meters); the transition section 28 may be two to less than one foot (0.6 to less than 0.3 meters) in length, and the upper section 30 may extend 10 to 13 feet (3 to 4 meters) in length. The cross-sectional shape of the water rod may be circular, curvilinear, rectangular, cruciform shape, or a combination of curved and straight segments. A cross-sectional area of the water rod may be, for example, 1.55 square inches (10 square centimeters) at the upper section 30. Preferably the cross-sectional shape of the water rod is uniform along the length of at least the upper section 30 to promote laminar flow through the water rod and reduce flow resistance. The water rod is supported in the assembly at least by the spacers 18 and may be supported by the lower tie plate 16. The water rod may be a metallic material suitable for use in a nuclear reactor core such as zirconium based alloys.

The upper end 34 water rod terminates below the upper tie plate 14 and does not extend to the upper tie plate. Moderator, e.g., water, is discharged from the end 34 of the water rod and mixes with the coolant, e.g., water and/or steam, flowing in through the channel 20 and between the fuel rods 12. The upper end 34 of the water rod may be either above or below the enriched portion of the fuel rods. At least one water rod may terminate at an elevation in the fuel bundle assembly where a substantial portion, e.g., 25% to 75% of the coolant has converted to steam.

Preferably, the upper discharge end of the water rod is a simple open-end structure 34, such as a circular end of a cylindrical water rod. The diameter at the discharge end should be at least as large as a maximum diameter of the water rod. The simple open-ended discharge structure reduces the discharge resistance to the flow in the water rod. The open-end 34 of the water rod may be a straight walled end, curved slightly outward as a cone or horn, have other such wide mouth shapes, or be curved inward creating a slight restriction. Moderator from the water rod flows through the open-ended discharge structure 34 and mixes with the coolant flow through the channel 20 and between the fuel rods 12.

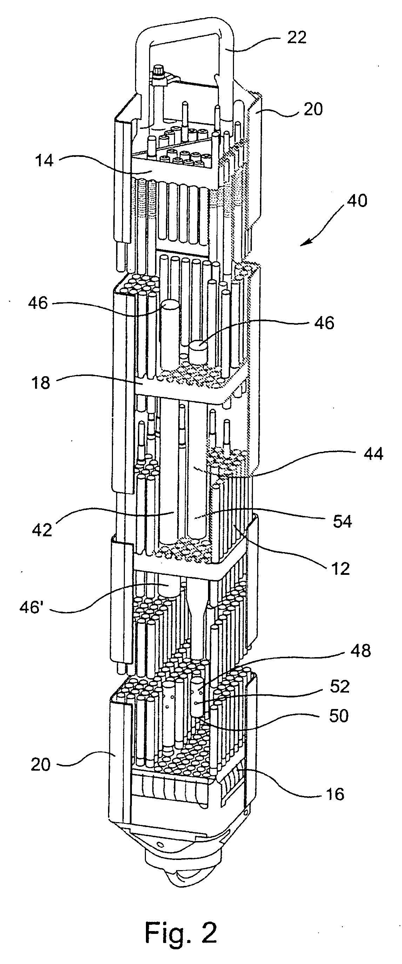

The open-ended discharge structure 34 of the upper outlet of the water rod 19 is preferably substantially free of flow restrictions. For example, the open-ended structure 34 does not have flow restriction plates, meshes or nozzles that would restrict flow through the rod and increase the pressure drop of the coolant flowing through the rod. Further, the walls of the water rod 19 do not curve inward at the open-ended structure 34 to form a nozzle or otherwise restrict the flow through the rod. FIGURE 2 is a side view showing in cross-section a fuel bundle assembly 40 shaped generally as a vertical column with a square cross-section. The illustration of the channel 20 and several of the fuel rods in Figure 2 has been removed to expose the water rods 42, 44 in the center of the assembly 40. In addition, the illustration of the fuel assembly 40 in Figure 2 is split at top and bottom quarter sections to show the top, middle and bottom sections of the assembly in the figure. A fuel bundle assembly may appear longer than is shown in Figure 2.

The water rods 42, 44 have open ends 46 at any different elevation within the fuel bundle assembly 40. The difference in the elevations may be, for example, six inches, one foot or three feet (15 centimeters, 30 centimeters or 0.9 meter), between the open ends 46 of the water rods 42, 44. The different elevations, e.g., 3 inches, 6 inches or a foot (9 cm; 18 cm or 36 cm) of the open ends 46 of the water rod results in moderator from each water rod being discharged at different elevations within the channel 20. The ends 46 of the water rods 42, 44 may be arranged to discharge moderator at different elevations in the channel to provide additional coolant to the fuel rods at selected elevations. As the liquid fluid flows up the water rod, the liquid primarily servers as a moderator for the fuel bundle assembly. As it is discharged from the top of the water rod, the liquid also serves as a coolant to the extent that it is applied to the fuel rods and is converted to steam. In addition, the standard length cooling rods may be included in the assembly 40. Water rods of different standard lengths may be purposefully included in an assembly to provide moderator discharge at different elevations in the channel. Discharging moderator at different elevations from multiple water rods may enhance the flow of coolant to various elevations of the fuel rods as compared to discharging multiple water rods at the same elevation in the assembly 40.

The lower sections 46, 48 of the water rod may optionally not extend to the lower tie plate 16. For example, the lower section 46 of water rod 42 may be a straight sided cylinder having a uniform diameter with the rest of the water rod 42. The straight sided cylinder lower section 46 of the water rod may terminate one or more feet, e.g., one to four feet (0.3 to 1.2 meters) above the lower tie plate. Coolant flowing up through the channel and between the fuel rods 12 enters the lower section of the water rod 42.

The water rod 42 provides a low resistance flow path and potentially slightly cooler flow path to direct coolant to an upper elevation of the assembly 40 at the discharge end 46 of the water rod. The lower section 48 of the water rod 48 is a narrow diameter cylinder having an open end inlet 50 or side inlet ports 52 (side inlet ports may also be arranged on the side of the lower section 46 of water rod 42). Coolant enters the open end inlet 50 or side inlet ports 52 and flows up through the narrow lower section 40 and to a wide diameter upper cylindrical section 54 of water rod 44. The open end inlet 50 may be a few inches (a few centimeters) or a foot or more (0.3 meters or more) above the lower tie plate 16. Coolant enters the inlets 50, 52 of water rod 44, flows from the narrow section to the wide section 54 and discharges from the water rod at the discharge end 46.

The water rods 19, 42 and 44 have upper ends 34, 46 that do not attached to an upper tie plate. Accordingly, the water rods do not require upper end plugs to connected the rod to the upper tie plate. Because the upper (and optionally lower) tie plates do not require receivers for the water rods, the tie plates may be designed without the constraints of such receivers, e.g., threaded or smooth apertures to receive the end plugs of the water rods. Further, the water rods disclosed herein may be used to reduce the number of unique water rods needed for various fuel bundle assemblies in a BWR core 1 (which is not shown to scale in Figure 1). For example, standard water rods having a common length or a small selection, e.g., 3 to 6, of standard water rods having various lengths may be used as water rods in all fuel bundle assemblies in the core of a BWR. Standard water rods having one or a few common lengths may be used for all fuel bundle assemblies because the water rods are not sized to connect to the upper tie and lower plates. Further, there is an acceptable range of elevations, e.g. within two to three feet (0.6 to 1.0 meters) of the upper tie plate, at which the water rods may discharge moderator in the assembly. Standardizing the water rods to a single common length or a few common lengths, e.g., 3 to 6, simplifies the fabrication of fuel bundle assemblies for a core of a BWR and uses standardization of parts, e.g., water rods, to reduce the cost and time for fabrication of fuel bundle assemblies.

By way of contrast, conventional BWR cores may have bundles of slightly differing lengths, e.g., BWR 2/3, BWR 4/6, etc., and these bundles require water rods of various specific lengths to accommodate the variations in length of the different fuel bundle assemblies. Because the water rods disclosed herein do not attach to the upper tie plate, a standard length water rod(s) may be used in the fuel bundle assemblies, despite the length variations of these assemblies.

The elimination of the upper portion of the water rods reduces the pressure drop of the fuel bundle assembly when compared to traditional designs by increasing the available cross sectional area within the channel 20 for coolant flow. The reduction in pressure drop and flow restrictions through the fuel bundle assembly may be especially beneficial for natural circulation BWR's.

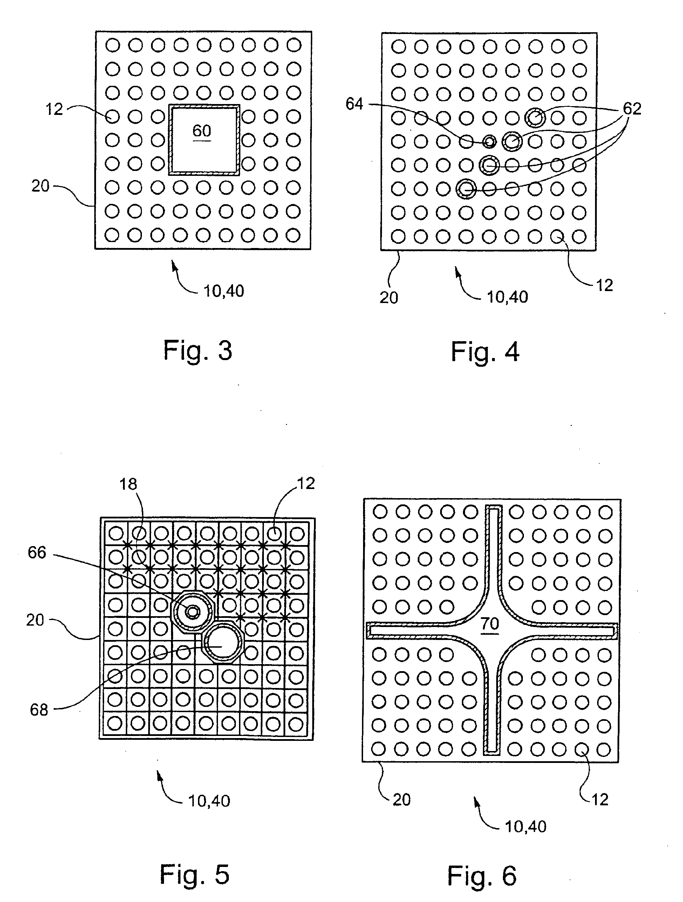

FIGURES 3 to 6 are cross-sectional illustrations of a fuel bundle assembly 10, 40 that show water rods having various cross-sectional shapes. The figures show the open ended upper discharge end of each of the water rods to illustrate the simple outlet structure of the discharge end of each water rod. Figure 3 shows a water rod 60 which is rectangular, e.g., square, in cross section and centered in an array of fuel rods 12. The single water rod 60 may have a uniform cross section through out its length or may have a short lower section of smaller cross-sectional area than an extended upper section. Figure 4 shows multiple water rods including cylindrical water rods 62 having a relatively large diameter and at least one smaller diameter cylindrical water rod 64. The cylindrical water rods 62, 64 may have a uniform cross-section throughout their lengths or may include a short narrow diameter lower section that, for example, attaches to the lower tie plate. The elevations of the discharge ends of the water rods 62, 64 may vary in the fuel assembly. Figure 5 shows a pair of cylindrical water rods 66, 68 having a uniform cylindrical diameter and straight cylindrical walled upper outlet. Water rod 68 has a uniform diameter throughout its length and does not extend to the lower tie plate. Water rod 66 has a narrow diameter lower section that attaches to the lower tie plate. Figure 5 also shows a spacer 18 that supports the fuel rods and water rods 66, 68. Figure 6 is a cruciform water rod 70 having a uniform cross-section and centered in the array of fuel rods 12. The cruciform water rod segments the fuel rods 12 in the assembly into four quadrants and provides an unobstructed flow path for moderator flowing up through the assembly. The cruciform water rod 70 need not be connected to the upper or lower tie plates and may extend most of the lengths of the fuel rods and the entirety of the lengths of the enriched portions of the fuel rods.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.
Some aspects of the present application are listed in the following numbered clauses:
1. A nuclear reactor fuel bundle assembly comprising:
   a fuel bundle including an array of fuel rods attached to a lower tie plate, an upper tie plate and housed in walls of a channel, and
   a water rod having an upper discharge end below and unattached to the upper tie plate, wherein the upper discharge end is below an enriched section of at least one of the fuel rods.
2. The nuclear reactor fuel bundle assembly in clause 1 wherein upper discharge end of the water rod has an inside diameter at least as large as a maximum diameter of the rod.
3. The nuclear reactor fuel bundle assembly in clause 1 wherein the upper discharge end of the water rod is within two feet of a bottom surface of the upper tie plate.
4. The nuclear reactor fuel bundle assembly in clause 1 wherein the water rod is a plurality of water rods and each water rod has an upper discharge end at an elevation in the assembly different from an elevation of an upper discharge end of another of the water rods.
5. The nuclear reactor fuel bundle assembly in clause 4 wherein the difference in elevations of the upper discharge ends of the water rods is at least 15,2 cm ( six vertical inches).
6. The nuclear reactor fuel bundle assembly in clause 1 wherein the water rod is unattached to the lower tie plate and the water rod has a lower inlet above an upper surface of the lower tie plate.
7. The nuclear reactor fuel bundle assembly in clause 1 wherein the water rod has a cross-sectional shape constant along an entire length of the rod.
8. A nuclear reactor fuel bundle assembly comprising:
   a fuel bundle including an array of fuel rods mounted in an upper tie plate and housed by a channel wall, and
   a first water rod having an upper discharge end below and unattached to the upper tie plate, wherein the upper discharge end is at a first elevation in the assembly, and
   a second water rod having an upper discharge end below and unattached to the upper tie plate, wherein the upper discharge end of the second water rod is at a second elevation in the assembly and the second elevation is different than the first elevation.
9. The nuclear reactor fuel bundle assembly in clause 8 wherein upper discharge end of the first water rod has an inside diameter at least as large as a maximum diameter of the first water rod.
10. The nuclear reactor fuel bundle assembly in clause 8 wherein the upper discharge end of the first water rod is within two feet of a bottom surface of the upper tie plate.
11. The nuclear reactor fuel bundle assembly in clause 8 wherein the difference in elevations of the upper discharge ends of the first and second water rods is at least six vertical inches.
12. The nuclear reactor fuel bundle assembly in clause 8 wherein the first water rod is unattached to the lower tie plate and the first water rod has lower inlet end above an upper surface of the lower tie plate.
13. The nuclear reactor fuel bundle assembly in clause 8 wherein the water rod has a cross-sectional shape constant along an entire length of the rod.
14. A method to include a water rod in a nuclear reactor fuel bundle assembly including an array of fuel rods attached to an upper tie plate and housed in a channel, the method comprising:
   selecting a plurality of water rods;
   inserting the water rods in the assembly, and
   arranging an upper discharge end of one of the water rods to be at an elevation in the assembly different from an elevation of an upper discharge end of another one of the water rods.
15. The method in clause 14 wherein the water rods are a standard length water rod and standard length water rods are used in each of fuel bundle assembly of a core of a boiling water nuclear reactor.
16. The method in clause 15 wherein the standard length water rod is selected from a group of standard length water rods.
17. The method in clause 14 wherein the water rods are secured in the assembly by a spacer and do not attach to the upper tie plate.
18. The method in clause 14 wherein the water rods do not attach to a lower tie plate.
19. The method in clause 14 further comprising reducing flow resistance through the assembly by an open ended discharge end on each water rod.
20. The method in clause 14 wherein the upper discharge ends of the water rods are at least 7,6 cm (three inches) below a lower surface of the upper tie plate.

## Claims

1. A nuclear reactor fuel bundle assembly (10) comprising:
a fuel bundle including an array of fuel rods (12) attached to a lower tie plate (16), an upper tie plate (14) and housed in walls of a channel (20), and
a water rod (19; 42, 44) having an upper discharge end (34; 46) below and unattached to the upper tie plate (14), wherein the upper discharge end (34; 36) is below an enriched section of at least one of the fuel rods (12) **characterised in that**
the water rod is unattached to the lower tie plate and the water rod has a lower inlet (50, 52) above an upper surface of the lower tie plate (16).

2. The nuclear reactor fuel bundle assembly of claim 1, wherein the upper discharge end (34; 36) of the water rod (19; 42, 44) has an inside diameter at least as large as a maximum diameter of the rod.

3. The nuclear reactor fuel bundle assembly of claim 1 or 2, wherein the upper discharge end (34; 36) of the water rod (19; 42, 44) is within 0.6m (two feet) of a bottom surface of the upper tie plate.

4. The nuclear reactor fuel bundle assembly of any of the preceding claims, wherein a plurality of water rods (19; 42, 44) are provided and each water rod (19; 42, 44) has an upper discharge end (34; 36) at an elevation in the assembly (10) different from an elevation of an upper discharge end of another of the water rods (19; 42, 44), wherein the difference in elevations of the upper discharge ends (34; 36) of the water rods (19; 42, 44) is at least 15,2cm (six vertical inches).

5. The nuclear reactor fuel bundle assembly of any of the preceding claims, wherein the water rod (19; 42, 44) has a cross-sectional shape constant along an entire length of the rod.

6. A method to include a water rod (19; 42, 44) in a nuclear reactor fuel bundle assembly (10) including an array of fuel rods (12) attached to an upper tie plate (14) and housed in a channel, the method comprising:
selecting a plurality of water rods (19; 42, 44);
inserting the water rods (19; 42, 44) in the assembly (10), and
arranging an upper discharge end (34, 36) of one of the water rods (19; 42, 44) to be at an elevation in the assembly (10) different by at least 15cm (six vertical inches) from an elevation of an upper discharge end (34; 36)of another one of the water rods (19; 42, 44),the or each water rod being unattached to the upper tie plate (14) and a lower tie plate (16), and having a lower inlet (50, 52 above an upper surface of the lower tie plate (16).

7. The method of claim 6, wherein the water rods (19; 42, 44) are standard length water rods and are used in each fuel bundle assembly (10) of a core of a boiling water nuclear reactor.

## Patentansprüche

1. Kernreaktor-Brennstoffbündelbaugruppe (10), aufweisend:
ein Brennstoffbündel mit einer Anordnung von Brennstoffstäben (12), die an einer unteren Verbindungsplatte (16) befestigt sind, einer oberen Verbindungsplatte (14) und das in Wänden eines Kanals (20) untergebracht ist, und
einen Wasserstab (19; 42, 44) mit einem oberen Auslassende (34; 46) unterhalb der und nicht an der oberen Verbindungsplatte (14) befestigt, wobei sich das obere Auslassende (34; 36) unterhalb eines angereicherten Bereichs von wenigstens einem der Brennstoffstäbe (12) befindet,
**dadurch gekennzeichnet, dass**
der Wasserstab an der unteren Verbindungsplatte nicht befestigt ist und der Wasserstab einen unteren Einlass (50, 52) über einer Oberseite der unteren Verbindungsplatte (16) hat.

2. Kernreaktor-Brennstoffbündelbaugruppe nach Anspruch 1, wobei das obere Auslassende (34; 36) des Wasserstabs (19; 42, 44) einen Innendurchmesser mindestens so groß wie einen maximalen Durchmesser des Stabes hat.

3. Kernreaktor-Brennstoffbündelbaugruppe nach Anspruch 1 oder 2, wobei das obere Auslassende (34; 36) des Wasserstabs (19; 42, 44) innerhalb 0,6 m (2 feet) einer Unterseite der oberen Verbindungsplatte liegt.

4. Kernreaktor-Brennstoffbündelbaugruppe nach einem der vorstehenden Ansprüche, wobei mehrere Wasserstäbe (19; 42, 44) vorgesehen sind und jeder Wasserstab (19; 42, 44) ein oberes Auslassende (34; 36) auf einer Höhe in der Baugruppe (10) hat, die sich von einer Höhe eines oberen Auslassendes eines anderen der Wasserstäbe (19; 42, 44) unterscheidet, wobei der Unterschied in den Höhen der oberen Auslassenden (34; 36) der Wasserstäbe (19; 42, 44) wenigstens 15,2 cm (6 vertikale inches) ist.

5. Kernreaktor-Brennstoffbündelbaugruppe nach einem der vorstehenden Ansprüche, wobei der Wasserstab (19; 42, 44) eine Querschnittsform hat, die entlang einer gesamten Länge des Stabes konstant ist.

6. Verfahren, bei dem ein Wasserstab (19; 42, 44) in einer Kernreaktor-Brennstoffbündelbaugruppe (10) enthalten ist, welche eine Anordnung von Brennstoffstäben (12) enthält, die an einer oberen Verbindungsplatte (114) befestigt und in einem Kanal untergebracht sind, wobei das Verfahren die Schritte aufweist:
Auswählen mehrerer Wasserstäbe (19; 42, 44);
Einführen der Wasserstäbe (19; 42, 44) in die Baugruppe (10), und
Anordnen eines oberen Auslassendes (34, 36) von einem der Wasserstäbe (19; 42, 44), dass er sich auf einer Höhe in der Baugruppe (10) befindet, die sich um wenigstens 15 cm (6 vertikale inches) von einer Höhe eines oberen Auslassendes (34; 36) eines anderen von den Wasserstäben (19; 42, 44) unterscheidet, wobei der oder jeder Wasserstab an der oberen Verbindungsplatte (14) und einer unteren Verbindungsplatte (16) nicht befestigt ist und einen unteren Einlass (50, 52) über einer Oberseite der unteren Verbindungsplatte (76) hat.

7. Verfahren nach Anspruch 6, wobei die Wasserstäbe (19; 42, 44) Standardlängen-Wasserstäbe sind und in jeder Brennstoffbündelbaugruppe (10) eines Kerns eines Siedewasserkernreaktors verwendet werden.

## Revendications

1. Assemblage (10) de grappe de combustible pour réacteur nucléaire, comprenant :
une grappe de combustible qui comporte une série de crayons combustibles (12) fixés à une plaque support inférieure (16), une plaque support supérieure (14) et est logée dans des parois d'un conduit, et
un canal d'eau (19 ; 42, 44) qui a une extrémité supérieure de refoulement (34 ; 46) située sous la plaque support supérieure (14) et n'est pas fixé à celle-ci, l'extrémité supérieure de refoulement (34 ; 36) étant sous un segment enrichi d'au moins un des crayons combustibles (12), **caractérisé en ce que**
le canal d'eau n'est pas fixé à la plaque support inférieure et le canal d'eau a une entrée basse (50, 52) au-dessus d'une surface supérieure de la plaque support inférieure (16).

2. Assemblage de grappe de combustible pour réacteur nucléaire selon la revendication 1, dans lequel l'extrémité supérieure de refoulement (34 ; 36) du canal d'eau (19 ; 42, 44) a un diamètre intérieur au moins aussi grand qu'un diamètre maximal du canal.

3. Assemblage de grappe de combustible pour réacteur nucléaire selon la revendication 1 ou 2, dans lequel l'extrémité supérieure de refoulement (34 ; 36) du canal d'eau (19 ; 42, 44) est à moins de 0,6 m (2 pieds) d'une surface inférieure de la plaque support supérieure.

4. Assemblage de grappe de combustible pour réacteur nucléaire selon l'une quelconque des revendications précédentes, dans lequel une pluralité de canaux d'eau (19 ; 42, 44) sont présents et chaque canal d'eau (19 ; 42, 44) a, dans l'assemblage (10), une extrémité supérieure de refoulement (34 ; 36) à une hauteur différente d'une hauteur d'une extrémité supérieure de refoulement d'un autre des canaux d'eau (19 ; 42, 44), la différence de hauteur des extrémité supérieures de refoulement (34 ; 36) des canaux d'eau (19 ; 42, 44) étant d'au moins 15, 2 cm (six pouces en verticale).

5. Assemblage de grappe de combustible pour réacteur nucléaire selon l'une quelconque des revendications précédentes, dans lequel le canal d'eau (19 ; 42, 44) a une section transversale d'une forme constante tout le long du canal.

6. Procédé pour inclure un canal d'eau (19 ; 42, 44) dans un assemblage (10) de grappe de combustible pour réacteur nucléaire qui comporte une série de crayons combustibles (12) fixés à une plaque support supérieure (14) et est logée dans des parois d'un conduit, le procédé comprenant des étapes consistant à :
choisir une pluralité de canaux d'eau (19 ; 42, 44) ;
introduire les canaux d'eau (19 ; 42, 44) dans l'assemblage (10), et
disposer une extrémité supérieure de refoulement (34 ; 36) d'un des canaux d'eau (19 ; 42, 44) pour qu'elle soit, dans l'assemblage (10), à une hauteur différente d'au moins 15,2 cm (6 pouces en verticale) d'une hauteur d'une extrémité supérieure de refoulement (34 ; 36) d'un autre des canaux d'eau (19 ; 42, 44), le ou chaque canal d'eau n'étant pas fixé à la plaque support supérieure (14) ni à une plaque support inférieure (16) et ayant une entrée basse (50, 52) au-dessus d'une surface supérieure de la plaque support inférieure (16).

7. Procédé selon la revendication 6, dans lequel les canaux d'eau (19 ; 42, 44) sont des canaux d'eau d'une longueur standard et sont utilisés dans chaque assemblage (10) de grappe de combustible d'un coeur de réacteur nucléaire à eau bouillante.
